# EUROPÄISCHE PATENTANMELDUNG

(11) **EP 0 697 238 A2**
(43) Veröffentlichungstag der Anmeldung: **21.02.1996**
(21) Anmeldenummer: 95112258.9
(22) Anmeldetag: 04.08.1995
(51) Int. Cl.: B01D 53/68, B01D 53/46, C02F 1/58

(54) **Filtermaterial und Verfahren zur Entfernung von Halogenen und peroxidhaltigen Verbindungen**

(30) Priorität: 15.08.1994 DE 4428727
(71) Anmelder: HOECHST AKTIENGESELLSCHAFT, D-65929 Frankfurt am Main (DE)
(72) Erfinder: von Eysmondt, Jörg, Dr., D-65719 Hofheim (DE); Schleicher, Andreas, Dr., D-65615 Beselich (DE); Frank, Georg, Dr., D-72074 Tübingen (DE)

(57) **Zusammenfassung**

Ein erfindungsgemäßes Filter zur Entfernung von Halogenen und/oder peroxidhaltigen Verbindungen aus Gasen oder Flüssigkeiten enthält als Filtermaterial einen oder mehrere Polyarylenthioäther. Das Filterverfahren wird bei Temperaturen im Bereich von minus 50 bis plus 250 °C betrieben, wobei das Filtermaterial in Form von Pulver, Fasern, Folien oder Formteilen eingesetzt wird.

## Beschreibung

Die Erfindung betrifft ein Filter sowie ein Verfahren zur Entfernung von Halogenen und peroxidhaltigen Verbindungen. Bei dem Verfahren wird ein Gas oder eine Flüssigkeit mit einem Filtermaterial, das mindestens einen Polyarylenthioether enthält, in Kontakt gebracht.

Es ist bekannt, daß Halogene allgemein auf Festkörperoberflächen, Metallen, Halbleitern und anorganischen Isolatoren adsorbiert werden können (Prog. Surf. Sci., 27(1-2) 25 - 160, 1988). Dabei können je nach verwendetem Festkörper Physisorptions- oder Chemisorptionsmechanismen auftreten. In allen Fällen ist aber nur die Oberfläche des Festkörpers aktiv. Viele Untersuchungen zur Halogenadsorption wurden im Ultrahochvakuum durchgeführt und dienten mechanistischen und kinetischen Untersuchungen des Adsorptionsprozesses.

Es ist weiter bekannt (DE-A1-38 05 407), daß zur Entfernung von Chlor aus Gasgemischen Aktivkohle eingesetzt werden kann, die mit Kupfer und/oder Zinkcarbonaten imprägniert wurde. Hier wirkt wiederum nur die Oberfläche der Aktivkohle. Dabei ist zu beachten, daß Aktivkohle mit nahezu allen in der Luft enthaltenen Schadstoffen reagiert, so daß beispielsweise die Wirksamkeit gegenüber Chlor durch die Konkurrenzprozesse der Kohlenwasserstoffadsorption herabgesetzt wird. Auch das Vorhandensein von Feuchtigkeit hat einen negativen Einfluß auf die Chlorfilterwirkung.

Es ist weiter bekannt (Khim. Volonkna, (1) 22-24, 1988), daß Fasern aus einem Acrylnitril-5-Vinyl-2-Methylpyridin Copolymer zur Chemisorption von Jod und Chlor verwendet werden können. Die Oberflächen der Fasern werden mit Lösungen aus K₄[Fe(CN)₆] und Cu(NO₃)₂ modifiziert. Die Filterwirkung gegenüber den genannten Halogenen nimmt dabei mit der Basizität der Fasern zu. Aufgrund der Präparation ist klar, daß auch hier nur die Oberfläche der Fasern aktiv ist.

Die genannten Filtersysteme haben den Nachteil, daß sie nur spezifisch auf eine bestimmte Gassorte optimal reagieren und nicht ohne großen Aufwand in der für Filter optimalen Form als Vlies oder Gewebe hergestellt werden können. Sie benötigen hierfür Stützgewebe, die lediglich eine Gewichtszunahme ohne Aktivitätssteigerung bewirken.

Aufgabe der Erfindung war es daher, ein Filter und ein Verfahren zur Entfernung von Halogenen und/oder peroxidhaltigen Verbindungen zur Verfügung zu stellen, bei denen die genannten Nachteile nicht auftreten.

Die Erfindung betrifft ein Filter zur Entfernung von Halogenen und/oder peroxidhaltigen Verbindungen aus Gasen und Flüssigkeiten, das einen oder mehrere Polyarylenthioether enthält.

Unter Polyarylenthioethern werden Verbindungen verstanden, die mindestens eine Arylensulfid-Einheit (-Ar-S-; Ar = Arylen) enthalten. Arylene sind beispielsweise Phenylen, Biphenylen (-C₆H₄-C₆H₄-), Naphthalen, Anthracen oder Phenanthren, die ein- oder mehrfach substituiert sein können. Substituenten sind z.B. geradkettige, cyclische oder verzweigte C₁-C₂₀-Kohlenwasserstoffreste, wie C₁-C₁₀-Alkylreste, z.B. Methyl, Ethyl, n-Propyl, iso-Propyl, n-Butyl, t-Butyl oder n-Hexyl, oder C₆-C₁₄-Arylreste, z.B. Phenyl oder Naphtyl; Halogene, Sulfonsäure-, Amino-, Nitro-, Cyano-, Hydroxy-, oder Carboxylgruppen.

Polyarylenthioether sind beispielsweise Verbindungen, die Einheiten der Formel

[(Ar¹ )ₙ-X)]ₘ-[(Ar²)ᵢ-Y]ⱼ-[(Ar³)ₖ-Z]-[(Ar⁴)ₒ-W)]ₚ- (I)

enthalten, wobei Ar¹, Ar², Ar³, Ar⁴, W, X, Y und Z unabhängig voneinander gleich oder verschieden sind. Die Indizes n, m, i, j, k, o und p sind unabhängig voneinander Null oder ganze Zahlen 1, 2, 3 oder 4, wobei ihre Summe mindestens 2 ergeben muß, Ar¹, Ar², Ar³, Ar⁴ stehen in der Formel (I) für Arylensysteme mit 6 bis 18 C-Atomen, z.B. Phenylen, Biphenylen (-C₆H₄-C₆H₄-), Naphthalen, Anthracen oder Phenanthren, die ein- oder mehrfach substituiert sein können. W, X, Y und Z stellen zweiwertige Verknüpfungsgruppen dar, ausgewählt aus -SO₂-, -S-,-SO-, - CO-, -O-, -CO₂-, Alkylen- oder Alkylidengruppen mit 1 bis 6, vorzugsweise 1 bis 4 C-Atomen. Die Arylgruppen Ar¹, Ar², Ar³, Ar⁴ der Formel (I) können gegebenenfalls unabhängig voneinander ein oder mehrere funktionelle Gruppen, z.B. geradkettige oder verzweigte Alkylreste wie Methyl, Ethyl, n-Propyl, iso-Propyl, n-Butyl, t-Butyl; Halogene, Sulfonsäure-, Amino-, Nitro-, Cyano-, Hydroxy-, oder Carboxylgruppen enthalten. Ferner sind auch Blockcopolymere aus Einheiten der Formel (I) einsetzbar.

Peroxidhaltige Verbindungen sind beispielsweise Peroxide wie Wasserstoffperoxid und dessen Derivate, organische Peroxide, anorganische Persäuren, wie Peroxomonoschwefelsäure und Peroxodischwefelsäure, organische Persäuren wie Peressigsäure, Perbenzoesäure und die Salze der anorganischen und organischen Persäuren.

Gegenstand der Erfindung ist auch ein Verfahren zur Entfernung von Halogenen und/oder peroxidhaltigen Verbindungen aus Gasen oder Flüssigkeiten, bei dem das zu reinigende Gas oder die Flüssigkeit mit einem Material in Kontakt gebracht wird, das einen oder mehrere Polyarylenthioether enthält.

Das Filter und das Verfahren gemäß der Erfindung eignen sich besonders gut zur Entfernung von Wasserstoffperoxid und dessen Derivaten aus Gasen und Flüssigkeiten.

Geeignete Polymere sind beispielsweise Polyarylenthioether mit wiederkehrenden Einheiten der Formeln (II) bis (VI), deren Synthesen z.B. in Chimia 28(9), 567 beschrieben sind sowie Polyarylenthioether mit wiederkehrenden Einheiten der Formel (VII), die z.B. in US - A- 4,016,145 beschrieben sind. 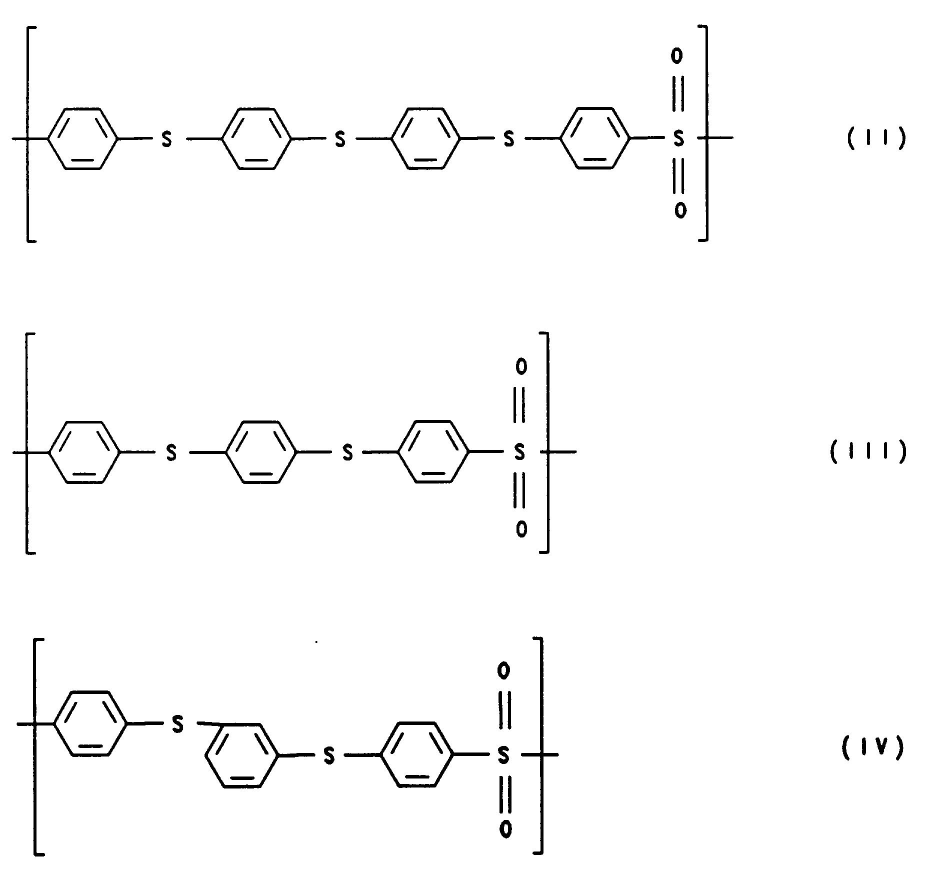 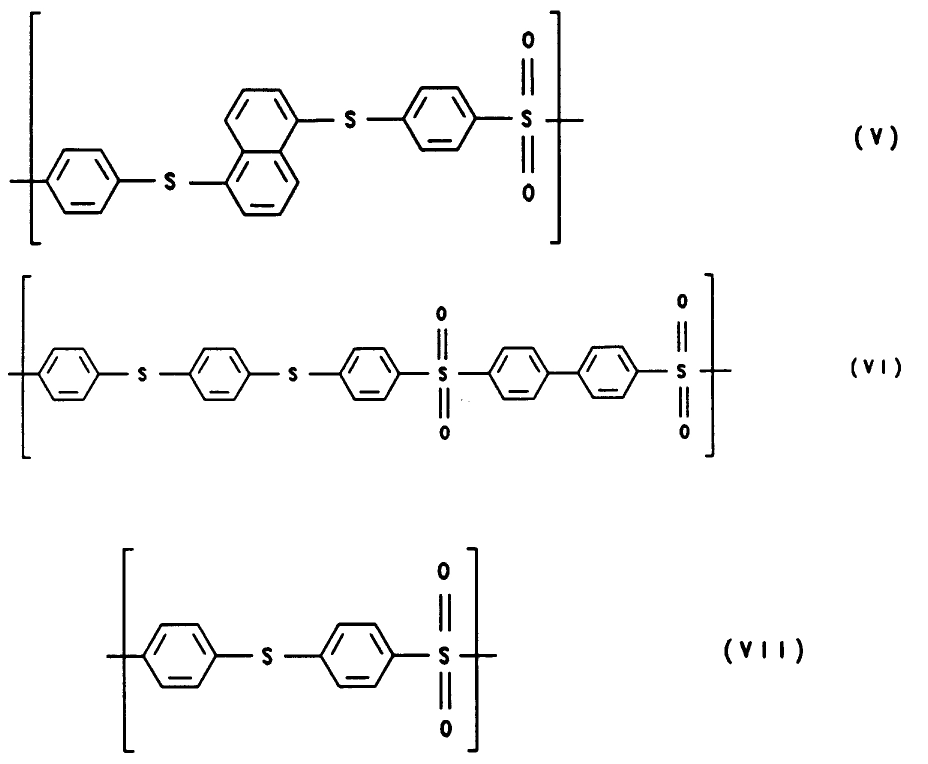
Ein besonders bevorzugter Polyarylenthioether ist Polyphenylensulfid (PPS), insbesondere 1,4-Polyphenylensulfid. Die Struktur von 1,4-Polyphenylensulfid besteht aus wiederkehrenden Einheiten der Formel (VIII), dessen Herstellungsprozess z.B. in den US-Patenten 3,354,129, 3,919,177, 4,038,262 und 4,282,347 beschrieben ist.

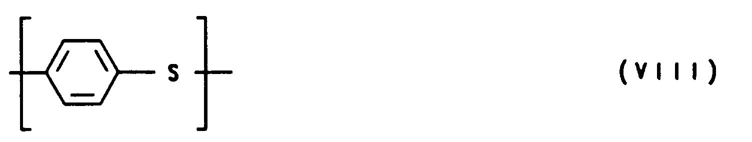

Das PPS der Formel (VIII) kann auch bis zu einem Anteil von 30 Mol% eine 1,2- und/oder 1,3-Verknüpfung am aromatischen Kern aufweisen.

Für die Erfindung sind im allgemeinen Polyarylenthioether geeignet, die eine mittlere Molmasse Mw von 4.000 bis 200.000, vorzugsweise 10.000 bis 150.000, insbesondere 25.000 bis 100.000 g/mol aufweisen.

Die Polymere können als Pulver, Fasern, Folien oder Formkörper zur Herstellung eines Filters eingesetzt werden. Durch geeignete Verfahren lassen sich auch Formkörper mit besonders großer Oberfläche herstellen, beispielsweise mit Gitter- oder Wabenstruktur. Die Pulver können im allgemeinen beliebige Teilchengrößen besitzen, wobei auch Granulate verwendbar sind. Wichtig ist es, daß das zu behandelnde Gas oder die Flüssigkeit durch das Pulver, beispielsweise in Form eines Festbettes ohne Störung durchgeleitet werden kann. Werden die Polymere als Fasern verwendet, werden diese als Stapelfasern, Mikrofasern, Nadelfilz, "non woven" Material, Kardenband oder Gewebe eingesetzt. Auch Folien oder Folienschnipsel können in geeigneter Form Verwendung finden.

Der halogen- und/oder peroxid-haltige Strom des Gases kann bei jeder Temperatur, die unterhalb des Erweichungspunktes der enthaltenen Polymeren liegt, mit dem Filtermaterial gemäß der Erfindung behandelt werden. Im allgemeinen liegen die Einsatztemperaturen des Filters im Bereich von minus 50 bis + 250°C, vorzugsweise minus 40 bis + 250°C und insbesondere minus 30 bis + 240°C.

Die Entfernung von Halogenen und/oder peroxidhaltigen Verbindungen aus Gasen oder Flüssigkeiten erfolgt im allgemeinen quantitativ. Im allgemeinen beträgt die Verweilzeit pro cm Filterstrecke im Filter 0,0001 Sekunden bis 10 Minuten, vorzugsweise 0,001 Sekunden bis 1 Minute und insbesondere 0,005 bis 30 Sekunden. Die Grenzwerte können aber auch überschritten bzw. unterschritten werden.

Bei Kontakt von Polyarylenthioether mit halogen-haltigem Gas findet eine Additionsreaktion des Halogens an den Arylring statt. Im allgemeinen ist die Aufnahmekapazität des Polyarylenthioether-enthaltenden Materials erschöpft, wenn jeder Arylring maximal halogeniert ist. Das erschöpfte Material stellt dann ein neues Polymer dar, das wieder in den Stoffkreislauf rückgeführt werden kann, da es für andere Zwecke einsetzbar ist. Zusätzlich entsteht bei dem Kontakt von Polyarylenthioether mit Halogenen die entsprechende Halogenwasserstoffverbindung, die dann durch geeignete Nachfilter, z.B. mit Ca(OH)₂ entfernt werden kann.

Bei Kontakt von Polyarylenthioether mit peroxidhaltigen Verbindungen werden die Sulfidgruppen der Polyarylenthioether bis zur Stufe des Sulfons umgesetzt. Die Aufnahmekapazität des Materials reicht bis zur völligen Oxidation der Sulfidgruppen. Wenn ein zu reinigendes Gas oder eine zu reinigende Flüssigkeit nur peroxidhaltige Verunreinigungen enthält, stellt das erschöpfte Material ein neues Hochleistungspolymer mit sehr hoher Glastemperatur (T_{G} ≧ 300°C) dar, das für andere Zwecke, z.B. zur Herstellung von Formkörpern und Sinterwerkstoffen, verwendet werden kann. Das erschöpfte Material kann somit in den Stoffkreislauf rückgeführt werden und stellt keine Belastung für die Umwelt dar.

Bei der Entfernung der peroxidhaltigen Verbindungen aus Gasströmen werden aus dem enthaltenen Polyarylenthioether keine flüchtigen Produkte gebildet im Gegensatz zu Halogenen, wo gleichzeitig Halogenwasserstoffe gebildet werden.

Das Material auf Basis von Polyarylenthioethern, das in dem Filter oder dem Verfahren gemäß der Erfindung verwendet wird, kann im allgemeinen als unverschnittenes Material eingesetzt werden. Möglich ist aber auch der Zusatz von üblichen Füllstoffen, wie Kreide, Talkum, Ton, Glimmer, und/oder faserförmige Verstärkungsmittel, wie Glas- und Kohlenstoffasern, Whisker, sowie weitere übliche Zusatzstoffe und Verarbeitungshilfsmittel, z.B. Gleitmittel, Trennmittel, Antioxidantien, UV-Stabilisatoren, enthalten. Verwendung finden derartige Teile als hochbeanspruchbare Funktionsbauteile, beispielsweise im Flugzeug- und Automobilbau sowie im chemischen Apparatebau.

Den Polyarylenthioethern können andere Polymere zugesetzt werden (Blends), um z.B. die Oberflächenanteile der Polyarylenthioether zu vergrößern bzw. das Filtergewicht zu reduzieren, ohne dabei die Wirksamkeit des Polyarylenthioethers zu beeinträchtigen.

Das Filter gemäß der Erfindung kann für alle Gasen und Flüssigkeiten verwendet werden, aus denen Halogene oder peroxidhaltige Verbindungen entfernt werden sollen. So findet es beispielsweise Anwendung als Reinigungsfilter in Abluftkanälen in chemischen Produktionsanlagen, und bei der Halbleiterherstellung oder der Metallherstellung.

Das Filter gemäß der Erfindung kann auch zur Säuberung von Gasen oder Flüssigkeiten, die nicht mit den Filtermaterialien reagieren, wie Helium, Sauerstoff oder Stickstoff, verwendet werden. Die Konzentration der zu entfernenden Halogene und/oder der Peroxide kann dabei von 0,1 ppm bis 50 %, vorzugsweise von 0,1 ppm bis 40 % und insbesondere 0,2 ppm bis 40 % liegen.

### Beispiele:

1a) Eine kommerzielle 35 % H₂O₂-Lösung in Wasser wird als Vorlage auf eine Temperatur von 40°C erhitzt. Durch Überströmen von Stickstoff mit einer Geschwindigkeit von 120 l/h wird ein Teil des mit H₂O₂-gesättigten Wasserdampf in den Stickstofffluß übernommen. Dieser Gasstrom wird durch ein Glasfilterrohr von 20 cm Länge und einem Querschnitt von 2 cm² geleitet, das mit PPS-Pulver (mittlerer Teilchendurchmesser: 1 mm, Mw 30000 g/mol, Schmelzpunkt Tm: 288°C) gefüllt ist. Hinter diesem Filter befindet sich eine Waschflasche mit Kaliumjodid-Lösung, die sich schon bei einer H₂O₂-Konzentration von ca. 1 ppb verfärbt. Über einen Zeitraum von 8 h konnte keine Verfärbung des Kaliumjodid festgestellt werden, d.h. H₂O₂ wurde quantitativ vom eingesetzten Filter absorbiert.
   Anschließende ESCA-Messungen zeigten, daß durch die Reaktion mit H₂O₂ die Sulfidbrücken zum Sulfon oxidiert werden. Sulfoxid trat nur in sehr geringen Mengen auf.
1b) Vergleichsbeispiel: Bei Füllung des Filterrohres mit Watte bei identischem Versuchsaufbau wie in Beispiel 1a), erfolgte die Verfärbung der Kaliumjodid-Lösung innerhalb von 2 Minuten, wobei diese Zeit als Durchströmungszeit der Apparatur angesehen werden muß.
2) 2000 ppm Chlor in Stickstoff wurden mit einer Geschwindigkeit von 50 l/h über ein Filterrohr (Glas) der Länge 10 cm und 3,4 cm² Querschnitt geleitet, das mit PPS-Pulver (mittlerer Teilchendurchmesser: 1 mm, Mw 30000 g/mol, Schmelzpunkt Tm: 288° C) gefüllt ist. Ein nachgeschalteter kommerzieller Chlordetektor zeigte einen Chlorgehalt von 0 ppm an. Eine Messung des pH-Wertes des Gases hinter dem Filter zeigte an, daß HCl enthalten war.
   Durch ESCA-Messungen der Elementdetailspektren konnte die Bindung von Chlor an aromatische Ringe des PPS nachgewiesen werden.
3) Ca. 2000 ppm Fluor in Helium wurden mit einer Strömungsgeschwindigkeit von 10 l/h über eine Filterpatrone mit einem Querschnitt von 12,5 cm² und einer Länge von 8 cm geleitet. Nach dem Filter war kein Fluor mehr nachweisbar. Als Nachweisgerät diente ein kommerzielles Perkin Elmer UV/VIS-Spektrometer. Die Nachweisgrenze für Fluor liegt bei dem verwendeten Gerät bei ca. 5 ppm.

## Patentansprüche

1. Filter zur Entfernung von Halogenen und/oder peroxidhaltigen Verbindungen aus Gasen und Flüssigkeiten, das einen oder mehrere Polyarylenthioether enthält.

2. Verfahren zur Entfernung von Halogenen und/oder peroxidhaltigen Verbindungen aus Gasen oder Flüssigkeiten, bei dem das zu reinigende Gas oder die Flüssigkeit mit einem Material in Kontakt gebracht wird, das einen oder mehrere Polyarylenthioether enthält.

3. Filtermaterial nach Anspruch 1 oder Verfahren nach Anspruch 2, dadurch gekennzeichnet, daß das Filter mit einem Halogenwasserstoff entfernenden Nachfilter kombiniert wird.

4. Filtermaterial nach Anspruch 1 oder Verfahren nach Anspruch 2 oder 3, dadurch gekennzeichnet, daß Polyphenylensulfid mit wiederkehrenden Einheiten der Formel 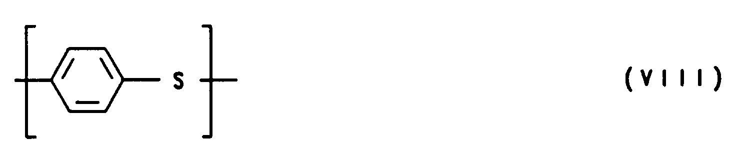 als Polyarylenthioether eingesetzt wird.

5. Filtermaterial nach Anspruch 1 oder Verfahren nach einem oder mehreren der Ansprüchen 2 bis 4, dadurch gekennzeichnet, daß das mittlere Molekulargewicht 4 000 bis 200 000 beträgt.

6. Verfahren nach einem oder mehreren der Ansprüche 2 bis 5, dadurch gekennzeichnet, daß die Entfernung der Halogene und/oder Peroxide bei Temperaturen von minus 50 bis + 250°C, insbesondere minus 30 bis + 240°C, erfolgt.

7. Verfahren nach einem oder mehreren der Ansprüche 2 bis 6, dadurch gekennzeichnet, daß die Verweilzeit pro cm Filterstrecke der halogen- und /oder peroxid-haltigen Gase / Flüssigkeiten 0,0001 Sekunden bis 10 Minuten, vorzugsweise 0,05 Sekunden bis 1 Minute, beträgt.

8. Verwendung von einem Polyarylenthioether zur Herstellung eines Halogen und/oder Peroxid entfernenden Filters für Gase und Flüssigkeiten.

9. Verwendung nach Anspruch 8 in Form von Pulver. Fasern, Folien oder Formkörpern.

10. Verwendung nach Anspruch 8 oder 9, wobei das Filter zur Reinigung von nicht mit dem Filter reagierenden Gasen oder Flüssigkeiten, die mit Halogenen und/oder Peroxiden verunreinigt sind, eingesetzt wird.
